# EUROPÄISCHE PATENTSCHRIFT

(11) **EP 3 470 712 B1**
(45) Veröffentlichungstag und Bekanntmachung des Hinweises auf die Patenterteilung: **27.05.2020**
(21) Anmeldenummer: 18198873.4
(22) Anmeldetag: 05.10.2018
(51) Int. Cl.: F16K 1/42

(54) **HUBVENTIL UND ANORDNUNG FÜR EIN HUBVENTIL**
POPPET VALVE AND ARRANGEMENT FOR A POPPET VALVE
SOUPAPE DE LEVAGE ET AGENCEMENT POUR UNE SOUPAPE DE LEVAGE

(30) Priorität: 09.10.2017 DE 102017123396
(43) Veröffentlichungstag der Anmeldung: 17.04.2019
(73) Patentinhaber: Samson Aktiengesellschaft, 60314 Frankfurt am Main (DE)
(72) Erfinder: Merscher, Michael, 63322 Rödermark (DE); Sander, Andreas, 69514 Laudenbach (DE)
(74) Vertreter: Schmid, Nils T.F.

(56) Entgegenhaltungen:
- EP-A2- 1 416 206
- DE-U1-202017 103 236
- US-A- 4 154 263

## Beschreibung

Die Erfindung betrifft ein Hubventil zum Einstellen eines Prozessfluides einer prozesstechnischen Anlage, wie eine chemische Anlage, beispielsweise eine petrochemische Anlage, eine Lebensmittel verarbeitende Anlage, beispielsweise eine Brauerei, ein Kraftwerk, beispielsweise ein Nuklearkraftwerk, oder dergleichen. Die Erfindung betrifft auch eine Anordnung für ein Hubventil.

EP 1 416 206 A2 betrifft Ventile und speziell Vorrichtungen und Verfahren zum Ausgleichen von Fluiddrucks bei Ventilen.

US 4,15 4,263 A1 beschreibt ein Regelventil mit einer Regelstruktur in der Fluiddruckenergie dissipiert wird mittels aufeinander abgestimmter, entgegengesetzter Fluidströmungs-Strahlen.

DE 20 2017 103 236 U1 betrifft ein Ventilglied mit einem Sitzring-Montageabschnitt, der eine Ringschulter als Auflage und Dichtfläche einen radialen Bund eines auf die Ringschulter gedrückten Sitzrings und ein gehäuseseitigen Gewindeabschnitt zum Einschrauben einer Halteeinrichtung umfasst, die den Sitzring in Anlage mit dem radialen Bund hält.

Aus dem Stand der Technik ist beispielsweise von DE 10 2015 011 551 B3 ein Stellventil bzw. Hubventil zum Steuern einer Fluidströmung einer prozesstechnischen Anlage bekannt. Das Stellventil umfasst ein Stellventilgehäuse mit einem Fluideinlass und einem Fluidauslass sowie einem dazwischen angeordneten Fluiddurchgang. Eine Trägerrippe des Stellventilgehäuses trägt einen Ventilsitz, der den Fluiddurchgang vollumfänglich umgibt. An dem Ventilsitz ist ein Ventilkäfig befestigt. Das Stellventilgehäuse hat eine Stellventilgehäuseverlängerung, die sich von dem Bereich des Fluiddurchgangs weg erstreckt und an dem entfernten Ende einen Deckelmontageflansch zur lösbaren Befestigung eines Gehäusedeckels aufweist. Ist der Gehäusedeckel entfernt, kann eine Bedienperson einfach auf das Innere des Stellventilgehäuses zugreifen. In dem Stellventilgehäuse sind als Montageeinheit ein Ventilsitzkörper, ein Ventilkäfig und eine Ventilkäfigverlängerung angeordnet. Die Montageeinheit kann bei geöffnetem Gehäusedeckel entfernt werden. Die Ventilkäfigverlängerung ist so dimensioniert, dass sie sich deutlich über einen Stellzugriffsflansch hinaus erstreckt, von dem aus sich die Stellventilgehäuseverlängerung erstreckt. Die Ventilkäfigverlängerung ist mit dem Ventilkäfig verschraubt. Die Montageeinheit aus Ventilsitz, Ventilkäfig und Ventilkäfigverlängerung wird zwischen der Trägerrippe und dem Gehäusedeckel des Stellventilgehäuses verspannt.

Das bekannte Hubventil hat sich insbesondere zum Regeln kryogener Medien bewährt und erfreut sich großer Beliebtheit. Allerdings besteht bei manchen Anwendungen der Wunsch nach der Verwendung eines asymmetrisch gestalteten Ventilkäfigs bzw. der Wunsch nach einer speziellen Orientierung der Öffnungen des Ventilkäfigs. Beim Einsetzen der Montageeinheit durch die Ventilgehäuseverlängerung hat der Monteur jedoch keine Sicht auf die Orientierung des Ventilkäfigs in dem Ventilgehäuse. Falls das Stellventil in einer Anlage montiert ist, somit der Fluideinlass und -auslass mit Rohrleitungen belegt sind, ist es dem Monteur auch nicht ohne weiteres möglich, nach Einsetzen der Montageeinheit zu überprüfen, ob diese in der korrekten Orientierung eingesetzt ist.

Es ist eine Aufgabe der Erfindung, ein Hubventil und eine Anordnung für ein Hubventil bereitzustellen, das die Nachteile des Standes der Technik überwindet, insbesondere ein Hubventil und eine Anordnung für ein Hubventil bereitzustellen zum Einstellen eines Prozessfluids, wie eines kryogenen Prozessfluids, bei dem eine vorbestimmte Montageposition auch für ungeübtes Montagepersonal einfach und ohne Beschädigungen des Hubventils, insbesondere einer Dichtung, sichergestellt ist.

Diese Aufgabe wird gelöst durch den Gegenstand des unabhängigen Anspruchs 1.

Demnach ist eine Anordnung für ein Hubventil zum Bereitstellen eines Prozessfluids, beispielsweise eines kryogenen Prozessfluids, einer prozesstechnischen Anlage, wie eine chemische Anlage, beispielsweise eine petrochemische Anlage, eine Lebensmittel verarbeitende Anlage, beispielsweise eine Brauerei, ein Kraftwerk, beispielsweise ein Nuklearkraftwerk, oder dergleichen vorgesehen. Ein Hubventil zeichnet sich im Allgemeinen dadurch aus, dass ein Ventilglied zum Einstellen des Prozessfluids relativ zu einem Ventilsitz eine lineare bzw. translatorische Hubbewegung vollführt. Ein Hubventil kann beispielsweise als Auf/Zu-Ventil gestaltet sein.

Die Anordnung umfasst ein Ventilgehäuse mit einem Eingang und einem Ausgang für das Prozessfluid, wobei das Ventilgehäuse eine zwischen dem Eingang und dem Ausgang angeordnete Durchgangsöffnung aufweist. Bei geöffnetem Hubventil kann das Prozessfluid betriebsgemäß von dem Eingang durch die Durchgangsöffnung zu dem Ausgang des Ventilgehäuses strömen. Ferner umfasst die Anordnung einen hülsenförmigen Ventilkäfig, vorzugsweise einen zylinderhülsenförmigen Ventilkäfig, zum linearen bzw. translatorischen Führen eines Ventilglieds, wie ein Hubkolben, des Hubventils in einer Axialrichtung, wobei der Ventilkäfig wenigstens einen quer zu der Axialrichtung verlaufenden Durchlasskanal für das Prozessfluid aufweist. In einem geöffneten Zustand des Hubventils fließt das Prozessfluid von dem Eingang des Ventilgehäuses durch dessen Durchgangsöffnung und durch den Durchlasskanal des Ventilkäfigs zum Ausgang des Ventilgehäuses. Vorzugsweise sind andere Strömungspfade vom Ventileingang zum Ventilausgang für das Prozessfluid nicht vorgesehen. Das Ventilglied, beispielsweise der Hubkolben, kann in Radialrichtung, vorzugsweise vollumfänglich und/oder in Axialrichtung entlang seiner gesamten Höhe, im Wesentlichen formkomplementär zu dem Ventilkäfig dimensioniert sein. An einem Außenumfang des Hubkolbens kann wenigstens eine Dichtung, beispielsweise ein Dichtungsring, vorgesehen sein, welcher eine Abdichtung zwischen dem Außenumfang des Ventilgliedes und dem Innenumfang des Ventilkäfigs bereitstellt.

Der Ventilkäfig ist derart in dem Ventilgehäuse angeordnet, dass der Ventilkäfig die Durchgangsöffnung bezüglich der Axialrichtung umfänglich umgibt, und dass eine bezüglich der Axialrichtung radiale Außenseite des Ventilkäfigs in Kontakt mit einer bezüglich der Axialrichtung radialen Innenseite des Ventilgehäuses steht. Der Ventilkäfig kann im Bereich des Ventilsitzes einen fußseitigen ringförmigen Kontaktabschnitt bezüglich des Ventilgehäuses aufweisen. Zu diesem Zweck kann das Ventilgehäuse beispielsweise eine bezüglich der Axialrichtung in Radialrichtung nach innen ragender Rippe aufweisen, an welcher sich der Ventilkäfig und/oder der Ventilsitz in Axialrichtung abstützen. Eine solche Abstützrippe kann den Umfang der Durchgangsöffnung definieren. Im Bereich einer axialen Abstützung des Ventilkäfigs an dem Ventilgehäuse und/oder einem Ventilsitz kann eine Ringdichtung vorgesehen sein, um sicherzustellen, dass bei einer Schließstellung des Ventilglieds bezüglich des Ventilsitzes kein Fluid entlang der Kontaktflächen des Ventilkäfigs und/oder des Ventilsitzes zu dem Ventilgehäuse von dem Eingang zum Ausgang des Ventilgehäuses fließen kann. Ein zweiter stirnseitiger Kontakt- und/oder Dichtabschnitt kann in einem zum Ventilsitz in Axialrichtung entfernten Ende des Ventilkäfigs vorgesehen sein, wo der Ventilkäfig in einem umfänglichen Ringkontakt mit dem Ventilgehäuse stehen kann. Gemäß einer exemplarischen Ausführung eines Ventilgliedes als Hubkolben, welches in einem Ventilkäfig geführt ist, kann der Hubkolben einen Durchgang in Axialrichtung aufweisen, so dass eine Trennung im geschlossenen Zustand des Stellgliedes erfolgt von dem Fluidbereich innerhalb des Ventilgliedes (und des Ventilkäfigs) sowie beispielsweise stromaufwärts des Ventilsitzes und einem zweiten Bereich beispielsweise stromabwärts des Ventilsitzes und außerhalb des Stellgliedes (und des Ventilkäfigs). Eine solche Ausführung eines Ventilgliedes ist insbesondere für hohe Druckdifferenzen von Vorteil, damit die axiale Hubbewegung ungeachtet eines möglicherweise hohen Druckgradienten insbesondere im geschlossenen Zustand erfolgen kann. Die Innenseite des Ventilgehäuses und die Außenseite des Ventilkäfigs können insbesondere in dem Kontaktbereich bzw. in den Kontaktbereichen im Wesentlichen kreisförmig gebildet sein. Insbesondere können in dem Kontaktbereich bzw. in den Kontaktbereichen der Innenseite des Ventilgehäuses und der Außenseite des Ventilkäfigs eine oder mehrere Ringdichtungen angeordnet sein. Ringdichtungen im Kontaktbereich zwischen radialer Außenseite des Ventilkäfigs und radialer Innenseite des Ventilgehäuses können insbesondere zur Abdichtung zwischen stromaufwärtigem Hochdruck und stromabwärtigem Niederdruckbereich dienen.

Erfindungsgemäß ist an der Außenseite des Ventilkäfigs und/oder an der Innenseite des Ventilgehäuses eine Sicherung zum Festlegen einer Relativstellung des Ventilkäfigs relativ zu dem Ventilgehäuse angeordnet. Insbesondere kann die Sicherung zum Festlegen der Relativstellung des Ventilkäfigs bezüglich des Ventilgehäuses in einem Bereich, wie einem stirnseitigen Kontaktbereich, des Ventilkäfigs vorgesehen sein, der in Axialrichtung beabstandet zu dem Ventilsitz angeordnet ist und/oder der bezüglich des wenigstens einen Durchlasskanals des Ventilkäfigs gegenüberliegend dem Ventilsitz angeordnet ist. Der Bereich des Ventilkäfigs nahe dem Ventilsitz und/oder mit dem Ventilsitz kann als Ventilkäfig-Fußabschnitt bezeichnet sein. Der Bereich des Ventilkäfigs, welcher entfernt zu dem Ventilsitz vorgesehen ist, kann als Ventilkäfig-Stirnabschnitt bezeichnet sein. Der Ventilkäfig-Fußabschnitt kann insbesondere im Bereich der Durchgangsöffnung und/oder einer Tragrippe des Stellventilgehäuses angeordnet sein. Der Ventilkäfig-Stirnabschnitt ist im montierten Zustand des Hubventils vorzugsweise in einem Steuerungs-Durchgangs-Bereich des Ventilgehäuses angeordnet, in dem ein mit dem Ventilglied verbundenes Stellglied des Hubventils von einem Stellantrieb in das Ventilgehäuse zum Betätigen des Ventilglieds hineinragt bzw. hindurchragt.

Die Verwendung einer Sicherung zum Festlegen einer Relativstellung zum Ventilkäfig und dem Ventilgehäuse erlaubt es, sicherzustellen, dass bei der Montage des Ventilkäfigs in dem Ventilgehäuse eine vorbestimmte Relativstellung des Ventilkäfigs zum Ventilgehäuse eingehalten wird. Vorzugsweise kann die Sicherung rotationsasymmetrische Komponenten zur eindeutigen Bestimmung der Montageendstellung umfassen. Durch das konstruktive Vorsehen der Sicherung an der Außenseite des Ventilkäfigs und/oder der Innenseite des Ventilgehäuses kann eine fehlerfreie Montage selbst durch ungeübtes Montagepersonal einwandfrei gewährleistet werden.

Gemäß einer Ausführung kann die Sicherung als Verdrehsicherung zum Verhindern einer Rotationsbewegung des Ventilkäfigs relativ zu dem Ventilgehäuse realisiert sein. Insbesondere kann die Verdrehsicherung eine relativ zur Axialrichtung in Umfangsrichtung formschlüssige Verbindung umfassen. Das Bereitstellen einer in Umfangsrichtung formschlüssigen Verbindung der Ventilkäfig-Außenseite zu der Ventilgehäuse-Innenseite im insbesondere stirnseitigen Kontaktbereich gewährleistet, dass keine Torsionsverschiebungen zwischen dem Ventilkäfig und dem Ventilgehäuse im insbesondere stirnseitigen Kontaktbereich auftreten, so dass eine im insbesondere stirnseitigen Kontaktbereich angeordnete Dichtung zwischen Ventilkäfig und Ventilgehäuse keiner Torsionslast ausgesetzt ist.

Gemäß einer Ausführung einer Anordnung, die mit der vorherigen kombinierbar ist, umfasst die Sicherung, vorzugsweise die Verdrehsicherung, wenigstens einen inneren radialen Vorsprung und/oder Rücksprung an der Außenseite des Ventilkäfigs und wenigstens einen formkomplementären äußeren radialen Rücksprung und/oder Vorsprung an der Innenseite des Ventilgehäuses. Es kann bevorzugt sein, dass an der Ventilkäfig-Außenseite mehrere, beispielsweise zwei oder drei, radiale Vorsprünge (oder Rücksprünge) vorgesehen sind. Vorzugsweise sind die wenigstens zwei radialen Vorsprünge und/oder Rücksprünge relativ zu der Axialrichtung rotations-asymmetrisch angeordnet. Es kann bevorzugt sein, dass an der radialen Ventilgehäuse-Innenseite mehrere, beispielsweise zwei oder drei, radiale Rücksprünge (oder Vorsprünge) vorgesehen sind. Vorzugsweise weist der Ventilkäfig wenigstens einen radialen Vorsprung auf. Insbesondere können alle radialen Vorsprünge an dem Ventilkäfig und radiale Rücksprünge sämtlichst an dem Ventilgehäuse vorgesehen sein. Die Anzahl von Rücksprüngen ist wenigstens genauso groß wie die Anzahl der Vorsprünge zum Realisieren der Verdrehsicherung. Es ist denkbar, dass das Ventilgehäuse wenigstens einen radialen Vorsprung und wenigstens einen radialen Rücksprung aufweist und der Ventilkäfig in formkomplementärer Weise wenigstens einen radialen Rücksprung und wenigstens einen radialen Vorsprung aufweist. Eine derartige Kombination oder eine Verbindung von wenigstens zwei Vor- und/oder Rücksprünge kann zum präzisen Festlegen einer vorbestimmten Montageposition vorteilhaft sein.

Gemäß einer Weiterbildung der Anordnung kann wenigstens ein radialer Vorsprung einstückig durch Material des Ventilkäfigs bzw. des Ventilgehäuses gebildet sein. Zusätzlich oder alternativ kann wenigstens ein radialer Vorsprung durch einen Verbindungskörper, wie einen Stift, einen Keil oder dergleichen, gebildet sein. Je nach Toleranzanforderungen für den Kontaktbereich kann eine einstückige oder eine mehrteilige Gestaltung für die erforderliche Präzision kostengünstiger zu fertigen sein.

Gemäß einer Weiterbildung der Anordnung, die mit der vorherigen kombinierbar ist, umfasst wenigstens ein radialer Rücksprung eine Aussparung, wie eine Sacklochbohrung, vorzugsweise zum Halten eines Verbindungskörpers, insbesondere eines Stiftes. Alternativ kann der wenigstens eine radiale Rücksprung eine sich in Axialrichtung erstreckende Kulisse, wie eine Längsnut, umfassen. Die Aussparung kann eine rein radiale Haupterstreckung aufweisen. Eine Aussparung, insbesondere eine Sacklochbohrung, kann relativ zu der radialen Haupterstreckung einen rotationssymmetrischen Querschnitt aufweisen. Ein als Kulisse, insbesondere als Längsnut ausgebildeter Rücksprung hat eine sich in Axialrichtung ausdehnende Längserstreckung und eine sich quer zu der Axialrichtung in Radialrichtung erstreckende Nuttiefe. Die Querschnittsbreite und/oder die radiale Nuttiefe kann entlang der axialen Längserstreckung der Längsnut konstant sein.

Gemäß der erfindungsgemässen Anordnung weist das Ventilgehäuse ein Innengewinde auf. Diese Anlordnung umfasst ferner eine Befestigungsmutter, die mit einem Außengewinde zum Einschrauben der Befestigungsmutter in das Innengewinde des Ventilgehäuses ausgestaltet ist. Vorzugsweise ist der Ventilkäfig zwischen der Befestigungsmutter und einem die Durchgangsöffnung des Ventilgehäuses umgebenden Ringabschnitt, beispielsweise einer Rippe, in Axialrichtung verspannbar. Beispielsweise kann die Befestigungsmutter mit einem ersten axialen Ende des Ventilkäfigs, beispielsweise einem Stirnende, in Kontakt stehen und der die Durchgangsöffnung umgebende Ringabschnitt mit einem zweiten Axialende des Ventilkäfigs, beispielsweise einem Fußende. Durch Einschrauben der Befestigungsmuttern in das Ventilgehäuse kann eine Verspannkraft auf den Ventilkäfig ausgeübt werden, um den Ventilkäfig in Axialrichtung gegen den die Durchgangsöffnung umgebenden Ringabschnitt vorzuspannen. Im Bereich des Ringabschnitts kann mittelbar mit dem Fußende des Ventilkäfigs in Berührkontakt stehen. Alternativ kann auch ein Zwischenelement, wie eine Unterlegscheibe, oder ein separat zu dem Ventilkäfig ausgebildeter Ventilsitz in Axialrichtung zwischen dem Ringabschnitt des Ventigehäuses und dem Ventilkäfig angeordnet sein. Die Befestigungsmutter hält den Ventilkäfig im montierten Zustand axial ortsfest an dem Ventilgehäuse fest.

Die erfindungsgemäße Anordnung umfasst ferner eine Zwischenhülse, die derart in Axialrichtung und/oder Radialrichtung zwischen der Befestigungsmutter und dem Ventilkäfig angeordnet ist, dass die axiale Spannkraft, mit welcher der Ventilkäfig zwischen dem Ringabschnitt und der Befestigungsmutter gehalten ist, vorzugsweise vollständig mittelbar von der Befestigungsmutter durch die Zwischenhülse an den Ventilkäfig übertragen wird. Es ist denkbar, dass zwei oder mehr Zwischenhülsen vorgesehen sind. Eine derartige Zwischenhülse zwischen der Befestigungsmutter und dem Ventilkäfig nach Art einer Unterlegscheibe zur Einstellung vorbestimmter Vorspannzustände und/oder zur Verringerung der Übertragung von Torsionskräften von der Befestigungsmutter an den Ventilkäfig vorgesehen sein.

Eine Weiterbildung einer Anordnung umfasst ferner eine radial zwischen dem Ventilkäfig und dem Ventilgehäuse angeordnete Dichtung. Die Dichtung kann insbesondere in einer in Axialrichtung durch die Zwischenhülse und durch den Ventilkäfig begrenzten Dichtungsaufnahme aufgenommen sein. Beispielsweise kann die Dichtung eine Ringdichtung, insbesondere mit viereckigen, beispielsweise quadratischem oder parallelogrammartigem Querschnitt sein. Eine solche Dichtung mit viereckigem Querschnitt kann zwei Seitenflächen aufweisen, die in einem Berührkontakt mit dem Ventilkäfig stehen sowie je eine Fläche, die in einem Berührkontakt mit dem Ventilgehäuse und der Zwischenhülse steht. Es ist bevorzugt, dass der axiale Abschnitt, in dem die Sicherung angeordnet ist, relativ zu dem axialen Abschnitt, in dem die Dichtung angeordnet ist, zumindest teilweise radial und/oder axial versetzt ist. Vorzugsweise weist die Innenseite des Ventilgehäuses und/oder die Außenseite des Ventilkäfigs je eine Dichtfläche und je eine Sicherungsfläche auf, wobei die Dichtfläche und die Sicherungsfläche sich vorzugsweise vollständig voneinander unterscheiden. Besonders bevorzugt kann zwischen der Sicherungsfläche und der Dichtfläche in Axialrichtung ein Abstand vorgesehen sein. Beispielsweise kann zwischen der Sicherungsfläche und der Dichtfläche ein Führungsabschnitt vorgesehen sein, in dem die Außenseite des Ventilkäfigs eine kreisringförmige Außenführungsfläche und/oder in dem die Innenseite des Ventilkäfigs eine kreisringförmige Innen-Führungsfläche bildet. Mit einem solchen Führungsabschnitt, der eine ordentliche Trennung in Axialrichtung zwischen der Sicherung und mittels einer Zwischenhülse verspannbaren Dichtung bereitstellt, kann insbesondere gewährleistet sein, dass die Dichtwirkung der Dichtung durch Vor- und/oder Rücksprünge der Sicherung unbeeinträchtigt ist.

Erfindungsgemäß ist die Zwischenhülse mit einer Linearführung relativ zu dem Ventilgehäuse und/oder relativ zu dem Ventilkäfig gehalten, die eine translatorische Relativbewegung in Axialrichtung zulässt und eine rotatorische Relativbewegung verhindert. Hierdurch kann die Übertragung einer Torsion von einer einschraubbaren Befestigungsmutter auf den Ventilkäfig und insbesondere eine daran vorgesehene Ringdichtung weitgehend oder sogar vollständig vermieden werden.

Die Erfindung betrifft auch ein Hubventil zum Einstellen eines Prozessfluids einer prozesstechnischen Anlage, wie einer chemischen Anlage, einer Lebensmittel verarbeitenden Anlage, einem Kraftwerk oder dergleichen, umfassend eine Anordnung, wie oben beschrieben, sowie ein Ventilglied, wie ein Hubkolben, das in den Ventilkäfig linearbeweglich geführt ist, ein mit dem Ventilglied verbundenes Betätigungsmittel, wie eine Stellstange, zum Betätigen des Ventilglieds beispielsweise durch einen pneumatischen, hydraulischen oder elektrischen Stellantrieb, und insbesondere eine Gehäuseabdeckung mit einer Betätigungsöffnung für das Betätigungsmittel. Vorzugsweise ist das Hubventil so ausgestaltet, dass in Axialrichtung ein Abstand zwischen dem (oberen) Stirnende des Ventilkäfigs und der (unteren) Innenseite der Gehäuseabdeckung bereitgestellt ist. Vorzugsweise ist ein Abstand zwischen der Innenseite der Gehäuseabdeckung und dem (oberen) Betätigungsende der Befestigungsmutter vorgesehen. Insbesondere ist das Hubventil so ausgestaltet, dass der Gehäusedeckel relativ zu dem Ventilkäfig und/oder der Befestigungsmutter frei von einem axialen Berührkontakt ist. Die axiale Höhe der Zwischenhülse ist vorzugsweise kleiner als die axiale Höhe der Befestigungsmutter und des Ventilkäfigs. Die axiale Höhe der Befestigungsmutter ist vorzugsweise kleiner als die axiale Höhe des Ventilkäfigs. Der Axialabstand zwischen der Gehäuseabdeckung und dem Ventilkäfig sowie gegebenenfalls der Befestigungsmutter ist vorzugsweise größer als die axiale Höhe des Ventilkäfigs.

Weitere Eigenschaften, Merkmale und Vorteile der Erfindung werden durch die folgende Beschreibung bevorzugter Ausführungen der Erfindung anhand der beiliegenden Zeichnungen deutlich, in denen zeigen:
- Fig. 1: eine Querschnittsansicht eines Hubventils mit einer erfindungsgemäßen Anordnung;
- Fig. 2: eine Detailansicht der erfindungsgemäßen Anordnung gemäß Ausschnitt II von Fig. 1; und
- Fig. 3: eine Detailansicht des stirnseitigen Kontaktbereichs der erfindungsgemäßen Anordnung gemäß Ausschnitt III von Fig. 2.

Eine erfindungsgemäße Anordnung gemäß einer Ausführung der Erfindung wird im Folgenden im Allgemeinen mit der Bezugsziffer 1 bezeichnet und ein Hubventil, das mit der erfindungsgemäßen Anordnung 1 ausgestattet ist, hat im Allgemeinen das Bezugszeichen 2. Die wesentlichen Komponenten der erfindungsgemäßen Anordnung 1 sind ein Ventilgehäuse 3 und ein hülsenförmiger Ventilkäfig 5.

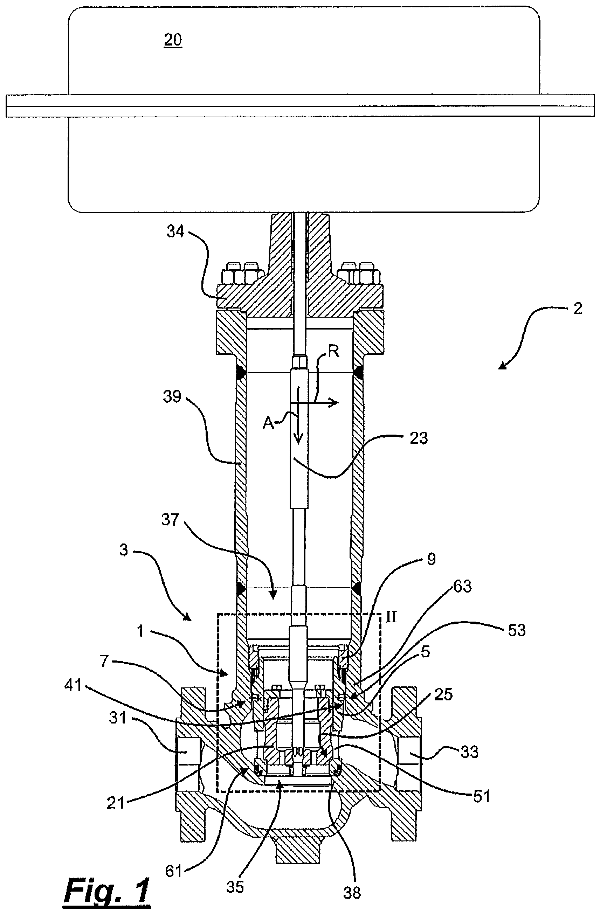

Das in Fig. 1 dargestellte Hubventil 2 setzt sich zusammen aus einem Ventilgehäuse 3, einem Stellantrieb 20, einem in dem Ventilgehäuse 3 angeordneten Ventilkäfig 5, einem in dem Ventilkäfig linear geführten Hubkolben 21, der ein Stellglied realisiert, sowie ein Betätigungsglied in Form der Stellstange 23, die die Stellkraft von dem Stellantrieb 20 an den Hubkolben 21 überträgt.

Gemäß der Darstellung in Fig. 1 hat das Ventilgehäuse 3 linker Hand einen Einlass 31 für Prozessfluid und rechter Hand einen Auslass 33 für Prozessfluid. Zwischen dem Einlass 31 und dem Auslass 33 stellt das Ventilgehäuse 3 eine verschließbare Durchgangsöffnung 35 bereit, durch die das Prozessfluid von dem Einlass 31 zu dem Auslass 33 fließen muss.

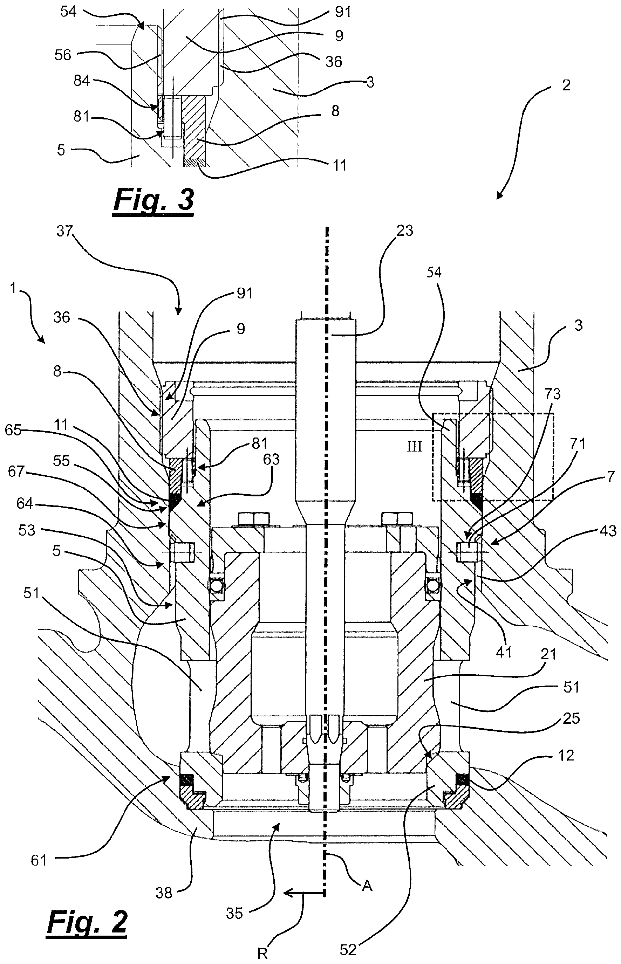

In dem in Fig. 2 oberen Bereich des Ventilgehäuses 3 weist dieses eine Betätigungsöffnung 37 auf, durch die die Stellstange 23 von dem Stellantrieb zu dem Hubkolben 21 ragt und die Betätigungsöffnung 37 ist von einem Kragen des Ventilgehäuses 3 umgeben, an welchem in axialer Richtung eine rohrartige Ventilgehäuseverlängerung 39 befestigt, gemäß Fig. 1 eingeschweißt, ist. Die Ventilgehäuseverlängerung 39 ist in einem oberen Bereich durch einen Ventilgehäusedeckel 34 verschlossen. Die Stellstange 23 durchdringt diesen Ventilgehäusedeckel 34, wobei zwischen der Stellstange 23 und dem Gehäusedeckel 34 eine Dichtung vorgesehen ist, um die Umgebung und den Innenraum des Hubventils 2 voneinander zu trennen. Die Ventilgehäuseverlängerung 39 hat den Zweck, einen vorbestimmten Mindestabstand zwischen der Durchgangsöffnung 35 des Ventilgehäuses 3 und dem Deckel bereitzustellen, um beispielsweise bei der Verwendung von kryogenen Prozessfluiden sicherzustellen, dass ein ausreichender Abstand zwischen dem üblicherweise bei Umgebungstemperatur betriebenen Stellantrieb 20 und dem kryogenen Prozessfluid im Bereich der Durchgangsöffnung 35 bereitgestellt ist.

In dem Ventilgehäuse 3 des Hubventils 2 ist der Ventilkäfig 5 angeordnet. Der Ventilkäfig 5 steht mit dem Ventilgehäuse 3 in einem unteren, fußseitigen Kontaktbereich 61 und in einem oberen, stirnseitigen Kontaktbereich 63 in einem Berührkontakt. Bei der vorliegend dargestellten bevorzugten Ausführung gemäß Fig. 2 besteht in beiden Kontaktbereichen 61 und 63 eine umfängliche Ringkontaktfläche zwischen der Außenseite 53 des Ventilkäfigs 5 und der Innenseite 41 des Ventilgehäuses 3.

In dem ringförmigen, fußseitigen Kontaktbereich 61 ist zwischen dem Ventilkäfig 5 und dem Ventilgehäuse 3 eine Ringdichtung 12 angeordnet, welche in der geschlossenen Stellung des Hubventils 2 (bei einem Berührkontakt des Hubkolbens 21 mit dem Ventilsitz 25) sicherstellt, dass kein Prozessfluid vom Einlass 31 durch den fußseitigen Kontaktbereich 61 zu dem Auslass 33 gelangen kann.

Im stirnseitigen Kontaktbereich 63 ist am Ventilkäfig 5 eine ringnutartige Dichtungsaufnahme 55 vorgesehen, in der eine (zweite) Ringdichtung 11 angeordnet ist, die im Stirnabschnitt 54 des Ventilkäfigs 5 eine Abdichtung zwischen dem Ventilkäfig 5 und dem Ventilgehäuse 3 realisiert. Bei der dargestellten Ausführung eines Hubventils 2 ist der Hubkolben 21 hülsenartig mit einem axialen Durchgang für das Prozessfluid realisiert. Aufgrund des Axialdurchgangs durch den Hubkolben 21 kann in einer in Fig. 2 dargestellten geschlossenen Stellung des Hubventils 2 Prozessfluid in den Stirnbereich 54 des Ventilkäfigs 5 bzw. den stirnseitigen Kontaktbereich 63 zwischen Ventilkäfig 5 und Ventilgehäuse 3 gelangen. Die Ringdichtung 11 in dem stirnseitigen Kontaktbereich 63 stellt daher sicher, dass eine innere Leckage in dem Hubventil 2 bei geschlossener Stellung des Hubkolbens 21 ausgeschlossen ist. Auf die Anordnung und Ausgestaltung der Dichtung 11 im stirnseitigen Kontaktbereich 63 wird im Folgenden noch im Detail eingegangen.

Am fußseitigen Ende 52 bzw. Fußbereich des Ventilkäfigs 5 ist bei der in Fig. 2 dargestellten bevorzugten Ausführung der Ventilsitz 25 einstückig mit dem Ventilkäfig 5 gebildet. Alternativ ist es denkbar, dass der Ventilsitz durch eine relativ zu dem Ventilkäfig 5 separate Komponente bereitgestellt ist. Ein von dem Ventilkäfig 5 separater Ventilsitz könnte beispielsweise ringförmig mit einer radial inneren konischen Dichtfläche realisiert sein und in Axialrichtung A zwischen dem Ventilkäfig 5 und der radialen Rippe bzw. dem Ringabschnitt 38 des Ventilgehäuses 3 angeordnet sein (nicht näher dargestellt).

Wenn der Hubkolben 21 in Axialrichtung A (nach oben) aus der in Fig. 2 dargestellten Schließstellung verfahren wird, stellt das Hubventil 2 einen zunehmend vergrößerbaren Durchflussquerschnitt für das Prozessfluid bereit (nicht näher dargestellt). Das Prozessfluid kann bei geöffnetem Hubventil 2 von dem Einlass 31 durch die von dem Ringabschnitt 38 des Ventilgehäuses 3 vollumfänglich umgebene Durchgangsöffnung 35 in den Innenraum des hülsenförmigen Ventilkäfigs 5 fließen. Aus dem Innenraum des Ventilkäfigs 5 kann das Prozessfluid aus Richtung Einlass 31 durch die Durchlasskanäle 51 in Radialrichtung nach außen in einen den Ventilkäfig 5 radial umgebenden Außenbereich fließen. Nachdem das Prozessfluid vom Einlass 31 durch die Durchgangsöffnung 35 des Ventilgehäuses 3 und durch einen Durchlasskanal 51 des Ventilkäfigs 5 geflossen ist, kann es ungehindert zum Auslass 33 bzw. Ausgang weiterfließen.

Bezüglich der Axialrichtung A können die Stellstange 23, der Hubkolben 21, der Ventilkäfig 5, die Ventilgehäuse-Innenseite 41 und/oder beispielsweise die rohrartige Ventilgehäuseverlängerung im Wesentlichen rotationssymmetrisch angeordnet und/oder geformt sein. Der Abschnitt des Ventilgehäuses 3, der die Betätigungsöffnung 37 umgibt, der Ventilkäfig, der Hubkolben 21 und/oder die Stellstange 23 sind bezüglich der Axialrichtung A koaxial zueinander angeordnet. Die Axialrichtung A entspricht der durch den Stellantrieb 20 realisierbaren Betätigungsrichtung.

Die Ventilkäfiganordnung oder kurz Anordnung 1 umfasst den in Axialrichtung A sowie in Umfangsrichtung um die Axialrichtung A ortsfest an einer vorbestimmten Montageposition in dem Ventilgehäuse 3 angeordneten Ventilkäfig 5. In Axialrichtung A ist der Ventilkäfig 5 stirnseitig durch die Befestigungsmutter 9 und fußseitig durch den radialrippenartigen Ringabschnitt 38 des Ventilgehäuses 3 gehalten. Die Befestigungsmutter 9 umfasst ein Außengewinde 91, das in ein Innengewinde 36 an der Innenseite 41 des Ventilgehäuses 3 eingreift. Abhängig von der Einschraubtiefe der Befestigungsmutter 9 in das Ventilgehäuse 3 ist die Haltekraft oder Verpresskraft einstellbar, mit welcher der Ventilkäfig 5 von der Befestigungsmutter 9 gegen den Ringabschnitt 38 gehalten bzw. verspannt ist.

Die Befestigungsmutter 9 ist ein im Wesentlichen hohlzylindrischer Körper mit einem für eine Gewindepaarung an den Innendurchmesser des Ventilgehäuses 3 abschnittsweise angepassten Außendurchmesser und einem möglichst breiten Befestigungsmuttern-Innendurchmesser. Die axiale Höhe der Befestigungsmutter 9 ist bei der in Fig. 2 dargestellten bevorzugten Ausführung wesentlich kleiner als der Außendurchmesser der Befestigungsmutter 9, insbesondere Ideiner als der Außenradius der Befestigungsmutter 9, beispielsweise zwischen 0,1- und 0,3-mal so hoch wie der Außendurchmesser der Befestigungsmutter 9. Das gemäß Fig. 2 obere, antriebsseitige Ende der Befestigungsmutter 9 endet unterhalb des oberen Endes des Ventilgehäuses 3. Das Innengewinde 36 des Ventilgehäuses 3 endet unterhalb des oberen Endes des Ventilgehäuses 3.

Der Ventilkäfig 5 ist ein im Wesentlichen hohlzylindrischer Körper mit einem Außendurchmesser, der zumindest abschnittsweise korrespondierend zu dem Innendurchmesser des Ventilkäfigs 3 dimensioniert ist. Die Außenkontur des Ventilkäfigs 5 kann axial-abschnittsweise gestuft bzw. konturiert sein. In dem stirnseitigen Kontaktbereich 63 zwischen Ventilkäfig 5 und Ventilgehäuse 3 ist gemäß Fig. 2 exemplarisch eine Führungsfläche 67 vorgesehen, die den größten Außendurchmesser des Ventilkäfigs 5 aufweist. Die Führungsfläche 67 ist formkomplementär zu einem im stirnseitigen Kontaktbereich 63 entsprechend angeordneten Abschnitt der Innenseite 41 des Ventilgehäuses 3. Der stirnseitige Kontaktbereich 63 umfasst ferner eine Sicherungsfläche 64, in der die Sicherung zwischen Ventilkäfig 5 und Ventilgehäuse 3 vorgesehen ist. Der stirnseitige Kontaktbereich 63 umfasst ferner eine Dichtfläche 65 im Bereich der stirnseitigen Dichtung 11. Die Dichtfläche 65 ist an der Innenseite 41 des Ventilgehäuses 3 entsprechend der Position der Dichtungsaufnahme 55 im montierten Zustand des Ventilkäfigs 5 angeordnet. Die Dichtfläche 65 ist in Axialrichtung A oberhalb der Führungsfläche 67 angeordnet. In Axialrichtung A unterhalb der Führungsfläche 67 ist die Sicherungsfläche 64 an der Innenseite 41 des Ventilgehäuses 3 ausgebildet.

Wie in Fig. 2 exemplarisch dargestellt, kann die Sicherungsfläche 64 an der Innenseite 41 des Ventilgehäuses 3 realisiert sein durch zwei sich in Axialrichtung A erstreckende Längsnuten 43, welche im stirnseitigen Kontaktbereich 63 in das Ventilgehäuse 3 eingebracht sind. Die Längsnut 43 ist in Axialrichtung A nach oben geöffnet, damit die an der Außenseite 53 des Ventilkäfigs 5 vorgesehene Sicherung beim Einsetzen des Ventilkäfigs 5 von oben in das Ventilgehäuse 3 in die Längsnut 43 einführbar ist. Die Sicherung an dem Ventilkäfig 5 ist in Fig. 2 exemplarisch in Radialrichtung R nach außen vorstehender Stift 71 realisiert. Sie bildet eine Verdrehsicherung 7. In dem Ventilkäfig 5 ist je Stift 71 einer Sacklochbohrung 73 eingebracht, in die der Stift 71 insbesondere unter Ausbildung einer Presspassung eingesetzt ist. Wenn der Ventilkäfig 5 mit wenigstens einem, beispielsweise zwei, eingesetzten Stiften 71 in das Ventilgehäuse 3 eingesetzt wird, so dass die Stifte, welche Radialvorsprünge bezüglich der Außenseite 53 des Ventilkäfigs 5 bilden, in die als Längsnuten 43 gebildeten radialen Rücksprünge der Innenseite 41 des Ventilgehäuses 3 formkomplementär eingreifen, ist eine Drehsicherung 7 realisiert, welche nur eine vorbestimmte Drehstellung bezüglich der Axialrichtung A des Ventilkäfigs 5 relativ zu dem Ventilgehäuse 3 zulässt. Die durch die Radialvorsprünge an der Außenseite 53 des Ventilkäfigs 5 und die radialen Rücksprünge an der Innenseite 41 des Ventilgehäuses 3 realisierte Sicherung ist durch eine Gleitpassung oder Spielpassung derart ausgestaltet, dass eine Relativbewegung des Ventilkäfigs *5 relativ zu dem Ventilgehäuse 3 in der Montageposition (nach abgeschlossener Montage) praktisch ausgeschlossen ist, wobei klar sei, das Setzungs- oder Relaxationserscheinungen auftreten können. Die Sicherung zwischen der Außenseite 53 des Ventilkäfigs 5 und der Innenseite 41 des Ventilgehäuses 3 stellt insbesondere sicher, dass beim Einschrauben der Befestigungsmutter 9 in das Ventilgehäuse 3 selbst bei hohen axialen Spannkräften und damit einhergehender Reibtorsion zwischen der Befestigungsmutter 9 und dem Ventilkäfig 5 keine Torsionsverformung und keine Drehbewegung des Ventilkäfigs 5 stattfindet (selbst falls keine Zwischenhülse 8 zwischen der Befestigungsmutter 9 und dem Ventilkäfig 5 vorgesehen wäre).

Bei der in Fig. 2 dargestellten erfindungsgemäßen Ausführung einer Ventilkäfiganordnung 1 ist in Axialrichtung A zwischen der unteren (Fuß-)Fläche der Befestigungsmutter 9 und dem Ventilkäfig 5 eine Zwischenhülse 8 angeordnet. Die Zwischenhülse 8 ist relativ zu dem Ventilkäfig 5 mittels einer Linearführung 81 drehfest gehalten. Die Linearführung 81 lässt ausschließlich eine lineare Bewegung der Zwischenhülse 8 in Axialrichtung A relativ zu dem Ventilkäfig 5 zu. Die Linearführung 81 ist in Fig. 2 exemplarisch durch einen Passstift realisiert, welcher in je eine passende Aufnahme des Ventilkäfigs 5 und der Zwischenhülse 8 eingreift.

In Axialrichtung A zwischen der Zwischenhülse 8 und dem Ventilkäfig 5 sowie in Radialrichtung R zwischen dem Ventilkäfig 5 und dem Ventilgehäuse 3 ist eine Dichtungsaufnahme 55 ausgebildet, in der die Ringdichtung 11 sitzt. Die Ringdichtung 11 hat einen parallelogrammförmigen Querschnitt. Es ist auch denkbar, dass die Ringdichtung 11 einen anderen, beispielsweise runden, dreieckigen, quadratischen oder rechteckigen Querschnitt oder dergleichen hat.

Die von der Befestigungsmutter 9 in Axialrichtung A in die Zwischenhülse 8 eingetragene Spannkraft wird von der Zwischenhülse 8 zumindest teilweise auf die Dichtung 11 übertragen. Eine konusförmige Kontaktfläche zwischen der Ringdichtung 11 und dem Ventilkäfig 5 unterstützt eine Umwandlung der axialen Spannkräfte von der Befestigungsmutter 9 in radiale Spann- und/oder Deformationskräfte, die insbesondere auf die Dichtung 11 wirken. Die Dichtung 11 wird beim Verspannen des Ventilkäfigs 5 zwischen der Zwischenhülse 8 und dem Ventilkäfig 5 verspannt. Die axiale Verspannung der Dichtung 11 bewirkt eine radiale Deformation der Dichtung 11, die elastisch sein kann, um eine radiale Verpressung zwischen der Dichtung 11 und der Ventilkäfig-Innenseite 41 zu bewirken und so eine besonders gute Dichtwirkung zu erzielen.

Dank der Linearführung der Zwischenhülse 8 relativ zu dem Ventilkäfig 5 erfolgt beim Verpressen eine rein axiale Bewegung der Zwischenhülse 8 und somit eine rein axiale Beeinflussung der Dichtung 11 durch die Zwischenhülse 8. Die Einwirkung der Zwischenhülse 8 auf die Dichtung 11 ist nahezu oder vollständig frei von Torsionsbestandteilen. Insbesondere falls die Dichtung 11 als Graphitdichtung oder dergleichen ausgeführt ist, ist die rein axiale Verpressung ohne Torsionskräfte für eine schadenfreie Verwendung der Dichtung 11 relevant.

Fig. 3 zeigt im Detail die zwischen der Befestigungsmutter 9 und dem Ventilkäfig 5 angeordnete Dichtung 11 und die Zwischenhülse 8. Die Zwischenhülse 8 ist zur Montage an dem Ventilkäfig 5 mit einem Innengewinde 84 ausgestattet. Der Ventilkäfig 5 hat an seinem stirnseitigen Axialende 54 ein Außengewinde, das komplementär zu dem Innengewinde 84 der Zwischenhülse 8 geformt ist. In Axialrichtung A sind das Innengewinde 84 und das Außengewinde 56 etwa gleich lang. In dem in den Fig. 1-3 dargestellten Montageentstellung ist die Zwischenhülse 8 in Axialrichtung A über das Innengewinde 84 hinaus auf den Ventilkäfig aufgeschraubt. Innengewinde 84 und Außengewinde 56 sind in Axialrichtung A vollständig versetzt zu einander mit einem kleinen Axialabstand angeordnet. Dadurch ist die Zwischenhülse 8 durch die Gewindepaarung gegen verlieren gesichert, gleichzeitig ist in dem Endmontagezustand eine axiale Relativbeweglichkeit der Zwischenhülse 8 relativ zu dem Ventilkäfig 5 bereitgestellt. Die Zwischenhülse 8 ist linearbeweglich, also rein axialbeweglich, an dem Ventilkäfig 5 mittels der Linearlagerung 81 gehalten, die beispielsweise durch einen, zwei oder mehr Stifte realisiert sein kann.

Die in der vorstehenden Beschreibung, den Figuren und den Ansprüchen offenbarten Merkmale können sowohl einzeln als auch in beliebiger Kombination für die Realisierung der Erfindung in verschiedensten Ausgestaltungen von Bedeutung sein.

### Bezugszeichenliste

- 1: Anordnung
- 2: Hubventil
- 3: Ventilgehäuse
- 5: Ventilkäfig
- 7: Verdrehsicherung
- 8: Zwischenhülse
- 9: Befestigungsmutter
- 11, 12: Dichtung
- 20: Stellantrieb
- 21: Hubkolben
- 23: Stellstange
- 25: Ventilsitz
- 31: Eingang
- 33: Ausgang
- 34: Deckel
- 35: Durchgangsöffnung
- 36: Innengewinde
- 37: Betätigungsöffnung
- 38: Ringabschnitt
- 39: Verlängerung
- 41: Innenseite
- 43: Längsnut
- 51: Durchlasskanal
- 52: Ventilkäfig-Fußabschnitt
- 53: Außenseite
- 54: Ventilkäfig-Stirnabschnitt
- 55: Dichtungsaufnahme
- 56: Außengewinde
- 61, 63: Kontaktbereich
- 64: Sicherungsfläche
- 65: Dichtfläche
- 67: Führungsfläche
- 71: Stift
- 73: Sacklochbohrung
- 81: Linearführung
- 84: Innengewinde
- 91: Außengewinde
- A: Axialrichtung

## Patentansprüche

1. Anordnung (1) für ein Hubventil (2) zum Einstellen eines Prozessfluids einer prozesstechnischen Anlage, wie eine chemische Anlage, einer Lebensmittel verarbeitenden Anlage, einem Kraftwerk oder dergleichen, umfassend ein Ventilgehäuse (3) mit einen Eingang (31) und einem Ausgang (33) für das Prozessfluid, wobei das Ventilgehäuse (3) eine zwischen dem Eingang (31) und dem Ausgang (33) angeordneten Durchgangsöffnung (35) aufweist, und
einen hülsenförmigen Ventilkäfig (5) zum linearen Führen eines Ventilglieds, wie ein Hubkolben (21), des Hubventils (2) in einer Axialrichtung (A), wobei der Ventilkäfig (5) wenigstens einen quer zu der Axialrichtung (A) verlaufenden Durchlasskanal (51) für das Prozessfluid aufweist,
wobei der Ventilkäfig (5) derart in dem Ventilgehäuse (3) angeordnet ist, dass der Ventilkäfig (5) die Durchgangsöffnung (35) bezüglich der Axialrichtung (A) umfänglich umgibt, und dass eine bezüglich der Axialrichtung (A) radiale Außenseite (53) des Ventilkäfigs (5) in Kontakt mit einer bezüglich der Axialrichtung (A) radialen Innenseite (41) des Ventilgehäuses (3) steht,
wobei an der Außenseite (53) und/oder an der Innenseite (41) eine Sicherung zum Festlegen einer Relativstellung des Ventilkäfigs (5) relativ zu dem Ventilgehäuse (3) angeordnet ist, wobei das Ventilgehäuse (3) ein Innengewinde (36) aufweist, wobei die Anordnung ferner eine Befestigungsmutter (9) mit einem Außengewinde (91) zum Einschrauben in das Innengewinde (36) umfasst, wobei der Ventilkäfig (5) zwischen der Befestigungsmutter (9) und einem die Durchgangsöffnung (35) des Ventilgehäuses (3) umgebenden Ringabschnitt (38) in Axialrichtung (A) verspannbar ist,
**gekennzeichnet durch** eine Zwischenhülse (8), die derart zwischen der Befestigungsmutter (9) und dem Ventilkäfig (5) angeordnet ist, dass die axiale Spannkraft, mit der der Ventilkäfig (5) zwischen dem Ringabschnitt (38) und der Befestigungsmutter (9) gehalten ist, von der Befestigungsmutter (9) durch die Zwischenhülse (8) an den Ventilkäfig (5) übertragen wird, wobei die Zwischenhülse (8) mit einer Linearführung (81) relativ zu dem Ventilgehäuse (3) und/oder relativ zu dem Ventilkäfig (5) gehalten ist, die eine translatorische Relativbewegung in Axialrichtung (A) zulässt und eine rotatorische Relativbewegung verhindert.

2. Anordnung nach Anspruch 1, **dadurch gekennzeichnet, dass** die Sicherung als Verdrehsicherung (7) zum Verhindern einer Rotationsbewegung des Ventilkäfigs (5) relativ zu dem Ventilgehäuse (3) realisiert ist, wobei insbesondere die Verdrehsicherung (7) eine relativ zur Axialrichtung (A) in Umfangsrichtung formschlüssige Verbindung umfasst.

3. Anordnung nach Anspruch 1 oder 2, **dadurch gekennzeichnet, dass** die Sicherung wenigstens einen radialen Vorsprung und/oder Rücksprung an der Außenseite (53) des Ventilkäfigs (5) und wenigstens einen formkomplementären radialen Rücksprung und/oder Vorsprung an der Innenseite (41) des Ventilgehäuses (3) umfasst.

4. Anordnung nach Anspruch 3, **dadurch gekennzeichnet, dass** wenigstens ein radialer Vorsprung einstückig durch Material des Ventilkäfigs (5) bzw. des Ventilgehäuses gebildet ist und/oder dass wenigstens ein radialer Vorsprung durch einen Verbindungskörper, wie ein Stift (71), ein Keil oder dergleichen, gebildet ist.

5. Anordnung nach einem der Anspruch 3 oder 4, **dadurch gekennzeichnet, dass** wenigstens ein radialer Rücksprung eine Aussparung, wie eine Sacklochbohrung (73), vorzugsweise zum Halten eines Verbindungskörpers, insbesondere eines Stifts (71), oder eine sich in Axialrichtung (A) erstreckende Kulisse, insbesondere eine Längsnut (43), umfasst.

6. Anordnung nach einem er vorstehenden Ansprüche, wobei die Zwischenhülse (8) derart zwischen der Befestigungsmutter (9) und dem Ventilkäfig (5) angeordnet ist, dass die axiale Spannkraftvollständig mittelbar von der Befestigungsmutter (9) durch die Zwischenhülse (8) an den Ventilkäfig (5) übertragen wird.

7. Anordnung nach einem er vorstehenden Ansprüche, ferner umfassend eine radial zwischen dem Ventilkäfig (5) und dem Ventilgehäuse (3) angeordnete Dichtung (11), die insbesondere in einer in Axialrichtung (A) durch die Zwischenhülse (8) und durch den Ventilkäfig (5) begrenzten Dichtungsaufnahme (55) aufgenommen ist.

8. Hubventil (2) zum Einstellen eines Prozessfluids einer prozesstechnischen Anlage, wie einer chemische Anlage, einer Lebensmittel verarbeitenden Anlage, einem Kraftwerk oder dergleichen, umfassend
eine Anordnung nach einem der vorstehenden Ansprüche,
ein Ventilglied, wie ein Hubkolben (21), das in dem Ventilkäfig (5) linearbeweglich geführt ist,
ein mit dem Ventilglied verbundenes Betätigungsmittel, wie eine Stellstange (23), zum Betätigen des Ventilglieds, und insbesondere
eine Gehäuseabdeckung mit einer Betätigungsöffnung (37) für das Betätigungsmittel.

## Claims

1. Arrangement (1) for a globe valve (2) for adjusting a process fluid of a technical process plant, such as a chemical plant, a food processing plant, a power plant or the like comprising
a valve housing (3) having an inlet (31) and an outlet (33) for the process fluid, wherein the valve housing (3) comprises a passage opening (35) that is arranged between the inlet (31) and the outlet (33), and
a sleeve-shaped valve cage (5) for linearly guiding a valve member, such as a reciprocating piston (21), of the globe valve (2) in an axial direction (A), wherein the valve cage (5) comprises at least one passage channel (51) for the process fluid which extends transversely in the axial direction (A),
wherein the valve cage (5) is arranged in the valve housing (3) such that the valve cage (5) circumferentially surrounds the passage opening (35) with respect to the axial direction (A) and that a radial outer side (53) of the valve cage (5) with respect to the axial direction (A) is in contact with a radial inner side (41) of the valve housing (3) with respect to the axial direction (A),
wherein a securing device for fixing a relative position of the valve cage (5) relative to the valve housing (3) is arranged on the outer side (53) and/or on the inner side (41), wherein the valve housing (3) comprises an internal thread (36), wherein the valve cage (3) further comprises an internal thread, wherein the arrangement further comprises a fastening nut (9) with an external thread (91) for screwing into the internal thread (36), wherein the valve cage (5) is clampable in axial direction (A) between the fastening nut (9) and an annular section (38) surrounding the passage opening (35) of the valve housing (3),
**characterized by** an intermediate sleeve (8) which is arranged between the fastening nut (9) and the valve cage (5) such that the axial clamping force with which the valve cage (5) is held between the annular section (38) and the fastening nut (9) is transmitted from the fastening nut (9) through the intermediate sleeve (8) to the valve cage (5), wherein the intermediate sleeve (8) is held with a linear guide (81) relative to the valve housing (3) and/or relative to the valve cage (5) which permits a translational relative movement in the axial direction (A) and prevents a rotational relative movement.

2. Arrangement according to claim 1, **characterized in that** the securing device is realized as a rotation lock (7) for preventing a rotational movement of the valve cage (5) relative to the valve housing (3), wherein in particular the rotation lock (7) comprises a connection which is form-fit relative to the axial direction (A) in the circumferential direction.

3. Arrangement according to claim 1 or 2, **characterized in that** the securing device comprises at least one radial projection and/or recess on the outer side (53) of the valve cage (5) and at least one shape complementary radial recess and/or projection on the inner side (41) of the valve housing (3).

4. Arrangement according to claim 3, **characterized in that** at least one radial projection is integrally formed by material of the valve cage (5) and/or the valve housing and/or at least one radial projection is formed by a connecting body, such as a pin (71), a wedge or the like.

5. Arrangement according to one of claims 3 or 4, **characterized in that** at least one radial recess comprises a recess, such as a blind borehole (73), preferably for holding a connecting body, in particular a pin (71), or a groove extending in the axial direction (A), in particular a longitudinal groove (43).

6. Arrangement according to one of the preceding claims, wherein the intermediate sleeve (8) is arranged is arranged between the fastening nut (9) and the valve cage (5) such that the axial clamping force is transmitted indirectly from the fastening nut (9) through the intermediate sleeve (8) to the valve cage (5).

7. Arrangement according to one of the preceding claims, further comprising a sealing (11) which is arranged radially between the valve cage (5) and the valve housing (3) and is received in particular in a sealing receiver (55) which is delimited in the axial direction (A) by the intermediate sleeve (8) and by the valve cage (5).

8. Globe valve (2) for adjusting a process fluid of a technical process plant, such as a chemical plant, a food processing plant, a power plant or the like, comprising an arrangement according to any one of the preceding claims,
a valve member, such as a reciprocating piston (21), which is linearly movably guided in the valve cage (5),
an actuating means connected to the valve member, such as an actuating rod (23), for actuating the valve member, and in particular
a housing cover with an actuating opening (37) for the actuating means.

## Revendications

1. Dispositif (1) pour une soupape de levage (2) pour le réglage d'un fluide de processus d'une installation industrielle, telle qu'une installation chimique, une installation de traitement de produits alimentaires, une centrale ou autre, comprenant
un boîtier de soupape (3) avec une entrée (31) et une sortie (33) pour le fluide de processus, dans lequel le boîtier de soupape (3) présente une ouverture de passage (35) disposée entre l'entrée (31) et la sortie (33), et
une cage de soupape (5) en forme de manchon, pour le guidage linéaire d'un élément de soupape tel qu'un piston alternatif (21) de la soupape de levage (2) dans une direction axiale (A), la cage de soupape (5) présentant au moins un canal d'écoulement (51) s'étendant perpendiculairement à la direction axiale (A) pour le fluide de processus,
dans lequel la cage de soupape (5) est disposée de telle façon dans le boîtier de soupape (3), que la cage de soupape (5) entoure l'ouverture de passage (35) circonférentiellement par rapport à la direction axiale (A), et qu'un côté extérieur (53) de la cage de soupape (5), radial par rapport à la direction axiale (A), est en contact avec un côté intérieur (41) du boîtier de soupape (3), radial par rapport à la direction axiale (A),
dans lequel une sécurité destinée à maintenir une position relative de la cage de soupape (5) par rapport au boîtier de soupape (3) est disposée sur le côté extérieur (53) et/ou sur le côté intérieur (41), le boîtier de soupape (3) présentant un filetage interne (36), le dispositif comprenant en outre un écrou de fixation (9) avec un filetage externe (91), destiné à être vissé dans le filetage interne (36), la cage de soupape (5) pouvant être serrée dans la direction axiale (A) entre l'écrou de fixation (9) et une section annulaire (38) entourant l'ouverture de passage (35) du boîtier de soupape (3),
**caractérisé par** une douille intermédiaire (8) disposée de telle façon entre l'écrou de fixation (9) et la cage de soupape (5), que la force de serrage axiale, avec laquelle la cage de soupape (5) est maintenue entre la section annulaire (38) et l'écrou de fixation (9), est transmise de l'écrou de fixation (9) à la cage de soupape (5) par le biais de la douille intermédiaire (8), la douille intermédiaire (8) étant maintenue par rapport au boîtier de soupape (3) et/ou par rapport à la cage de soupape (5) à l'aide d'un guidage linéaire (81) permettant un mouvement de translation relatif dans la direction axiale (A) et empêchant un mouvement de rotation relatif.

2. Dispositif selon la revendication 1, **caractérisé en ce que** la sécurité est conçue comme une sécurité anti-rotation (7) destinée à empêcher un mouvement de rotation de la cage de soupape (5) par rapport au boîtier de soupape (3), la sécurité anti-rotation (7) comportant en particulier une liaison par complémentarité de forme dans la direction circonférentielle par rapport à la direction axiale (A).

3. Dispositif selon la revendication 1 ou 2, **caractérisé en ce que** la sécurité comporte au moins une saillie et/ou un évidement radial(e) sur le côté extérieur (53) de la cage de soupape (5) et au moins un évidement et/ou une saillie radial(e) de forme complémentaire sur le côté intérieur (41) du boîtier de soupape (3).

4. Dispositif selon la revendication 3, **caractérisé en ce qu'**au moins une saillie radiale est formée par le matériau de la cage de soupape (5) ou du boîtier de soupape (3) et/ou **en ce qu'**au moins une saillie radiale est formée par un corps d'assemblage, tel qu'une tige (71), une cale ou autre.

5. Dispositif selon l'une des revendications 3 et 4, **caractérisé en ce qu'**au moins un évidement radial comporte une cavité, telle qu'un alésage borgne (73), avantageusement pour le maintien d'un corps d'assemblage, en particulier d'une tige (71) ou d'une coulisse s'étendant dans la direction axiale (A), en particulier une rainure longitudinale (43).

6. Dispositif selon l'une des revendications précédentes, dans lequel la douille intermédiaire (8) est disposée de telle façon entre l'écrou de fixation (9) et la cage de soupape (5), que la force de serrage axiale est entièrement transmise à la cage de soupape (5) par le biais de la douille intermédiaire (8) indirectement par l'écrou de fixation (9).

7. Dispositif selon l'une des revendications précédentes, comprenant en outre un joint d'étanchéité (11) disposé radialement entre la cage de soupape (5) et le boîtier de soupape (3), lequel est en particulier reçu dans un logement de joint d'étanchéité (55) délimité dans la direction axiale (A) par la douille intermédiaire (8) et par la cage de soupape (5).

8. Soupape de levage (2) pour le réglage d'un fluide de processus d'une installation industrielle, telle qu'une installation chimique, une installation de traitement de produits alimentaires, une centrale ou autre, comprenant
un dispositif selon l'une des revendications précédentes,
élément de soupape, tel qu'un piston alternatif (21), lequel est guidé de façon linéaire dans la cage de soupape (5),
un moyen d'actionnement relié à l'élément de soupape, tel qu'une barre de réglage (23), pour l'actionnement de l'élément de soupape, et en particulier
un recouvrement de boîtier avec une ouverture d'actionnement (37) pour le moyen d'actionnement.
